# EUROPEAN PATENT SPECIFICATION

(11) **EP 4 148 335 B1**
(45) Date of publication and mention of the grant of the patent: **06.11.2024**
(21) Application number: 21196641.1
(22) Date of filing: 14.09.2021
(51) Int. Cl.: F24F 13/10, F24F 13/12, F16K 1/00, F24F 11/81, F24F 12/00, F24F 13/20, F24F 13/24

(54) **A HEAT RECOVERY VENTILATION UNIT, AN AIRSTREAM SWAP UNIT AND A PRE-HEATER SUB-ASSEMBLY**
WÄRMERÜCKGEWINNUNGSBELÜFTUNGSEINHEIT, LUFTSTROMAUSTAUSCHEINHEIT UND VORWÄRMERANORDNUNG
UNITÉ DE VENTILATION À RÉCUPÉRATION DE CHALEUR, APPAREIL D'ÉCHANGE DE COURANT D'AIR ET SOUS-ENSEMBLE D'UN PRÉCHAUFFEUR

(43) Date of publication of application: 15.03.2023
(73) Proprietor: Dantherm Denmark A/S, 7800 Skive (DK)
(72) Inventor: Ziga, Muhamed, Skive (DK); Kamstrup, Søren Møgeltoft, Skive (DK); Fijan, Boris, Skive (DK); Madsen, Allan Nørgaard, Skive (DK)
(74) Representative: Patrade A/S

(56) References cited:
- EP-A1- 1 376 023
- EP-A1- 2 905 548
- EP-A1- 3 696 469
- EP-A2- 1 693 629
- GB-A- 2 562 674

## Description

### Field of the Invention

The present invention relates to a heat recovery ventilation unit, an airstream swap unit and a pre-heater sub-assembly for the heat recovery ventilation unit.

### Background of the Invention

Heat recovery ventilation units are designed such that one inlet must be connected with outdoor air while the other inlet must be connected with extract air and likewise for the two outlets being connected to the supply airstream and exhaust airstream.

This makes the individual heat recovery ventilation unit less versatile as it has a single configuration. Thereby, one type of heat recovery ventilation unit must be produced for each different configuration - the most common being where the purpose of each inlet is reversed.

This complexity increases if the heat recovery ventilation unit must have a bypass for bypassing the polygonal heat exchanger or if the outdoor air must pass an internal pre-heater.

The complexity persist along the entire supply chain until the heat recovery ventilation unit has been installed as the person installing a heat recovery ventilation unit must know the system design such that the correct heat recovery ventilation unit is sent to the installation site.

EP 1693629 A2 describes ventilating system having a heat exchanger. The ventilating system includes a case having a first flow passage for guiding outdoor air to a room, and a second flow passage for guiding room air to an outside of the room. The ventilating system further includes a bypass flow passage on one side of the case for bypassing the heat exchanger, a first damper for opening/closing the inlet space, a second damper for opening/closing the air discharge space, and a third damper for opening/closing the bypass flow passage.

Thus, there is a need for a heat recovery ventilation unit which can be used in several different configurations according to the ventilation system design.

### Object of the Invention

It is an object of the invention to provide a heat recovery ventilation unit defining a first airstream pathway and a second airstream pathway where the heat recovery ventilation unit is on-site configurable, such that both the first airstream pathway and the second airstream pathway can be used for outdoor air/supply airstream and extract air/exhaust airstream.

It is an object of the invention to provide an airstream swap unit for controlling an airflow pathway through a heat recovery ventilation unit, thereby controlling whether an airflow shall enter a polygonal heat exchanger or bypass the polygonal heat exchanger.

It is an object of the invention to provide a pre-heater sub-assembly. The pre-heater sub-assembly enabling that the first airstream pathway and the second airstream pathway can be used for preheating of outdoor air.

### Description of the Invention

An object of the invention is achieved by a heat recovery ventilation unit according to claim 1. In particular, the heat recovery ventilation unit comprises a polygonal heat exchanger and a housing substantially formed by insulation material. The polygonal heat exchanger and the housing define
- a first inlet and a first outlet defining a first airstream pathway from the first inlet to the first outlet through the polygonal heat exchanger;
- a second inlet and a second outlet defining a second airstream pathway from the second inlet to the second outlet through the polygonal heat exchanger.

The housing further comprises a bypass channel arranged to bypass the polygonal heat exchanger along the first airstream pathway, thereby defining a bypass airstream pathway. The heat recovery ventilation unit further comprises an airstream swap unit downstream to the polygonal heat exchanger and the bypass airstream pathway. The airstream swap unit is configurable between
a heat recovery position, where the bypass airstream pathway is blocked, and
a bypass position, where the first airstream pathway is blocked.

The first airstream pathway and the airstream pathway are named the first and second instead of outdoor air/supply airstream and extract air/exhaust airstream since the first airstream pathway may be the outdoor air/supply airstream or extract air/exhaust airstream and the second airstream pathway may be the outdoor air/supply airstream or extract air/exhaust airstream depending on the specific on-site installation.

Neither the first nor the second is more preferred, however throughout this application first airstream is connected to the bypass airstream pathway. The bypass airstream pathway can be used irrespective of whether the airstream is an outdoor air/supply airstream or an extract air/exhaust airstream.

The airstream swap unit is configured to swap between the bypass airstream pathway and the first airstream pathway such that heat recovery can be avoided when heat recovery is unwanted.

The housing formed by insulation material may have an outer wall with a thickness and a λ-value which together equals a U-value lower than 1.

The heat recovery ventilation unit has a backside adapted to be mounted against a wall, a frontside opposite to the backside, a topside and a bottom side defined relative to gravity vector, and a right and left side defined in a direction from the frontside to the backside.

The heat recovery ventilation unit is a negative pressure heat recovery ventilation unit as air will enter the inlets and the polygonal heat exchanger due to a negative pressure.

According to the invention, the airstream swap unit comprises a stationary grate and a slidable grate, the grates comprise a series of complementary apertures at a bypass section facing the bypass channel and at an exchanger section facing a side of the polygonal heat exchanger, wherein the apertures are offset between the bypass section and the exchanger section, wherein
- at the heat recovery position, the slidable grate is positioned such that the apertures at the heat exchanger section overlap and the apertures at the bypass section are blocked, and
- at the bypass position, the slidable grate is positioned such that the apertures at the bypass section overlap and the apertures at the exchanger section are blocked.

Thereby, it is only necessary to slide or displace the slidable grate to change the airstream swap unit between the heat recovery position and the bypass position. As the apertures are offset between the bypass section and the exchanger section.

The stationary grate is preferably positioned upstream to slidable grate and downstream to the polygonal heat exchanger as this configuration reduces risk of leak flow between the first airflow path and the bypass airflow path.

The skilled person would understand that the grates may be grids, where the grids form the complementary apertures.

In an aspect, the stationary grate may comprise between the exchanger section and bypass section a block part arranged to prevent leak flow.

The risk for leak flow is high between the sections and especially on the side of the stationary grate as the of the stationary grate is upstream relative to the slidable grate and the pressure is lower at the side of the slidable grate.

Thus, the block part will prevent leak flow especially when engaging either part of the housing or part of the polygonal heat exchanger.

In an aspect, the block part may extent substantially along a frontside or a backside of the polygonal heat exchanger.

Tests have shown that by extending along either the frontside or the backside of the polygonal heat exchanger then the block part reduces the risk of leak flow is lowered significantly.

In an embodiment, the block part may extent into the bypass channel and substantially along a frontside or a backside of the polygonal heat exchanger.

In an aspect, the airstream swap unit comprises an actuator adapted for displacing the slidable grate. There the position of the slidable grate is configurable by simple controlling the actuator.

In an aspect, the actuator is connected to the bypass section.

When the first airstream pathway is used for extract air/exhaust airstream then condensation will be generated downstream to the polygonal heat exchanger i.e. at the stationary grate and the slidable grate and the condensation will thus form at or on the actuator. This will over time damage the actuator, thereby increasing operation costs.

This can be counteracted simply by connecting the actuator to the bypass section as the actuator at that position will be unaffected by condensation.

In an aspect, the polygonal heat exchanger forms a side of the bypass channel.

Thereby, the depth of the heat recovery ventilation i.e. the distance between the frontside and backside of the heat recovery ventilation unit can be reduced by the polygonal heat exchanger forming a side of the bypass channel.

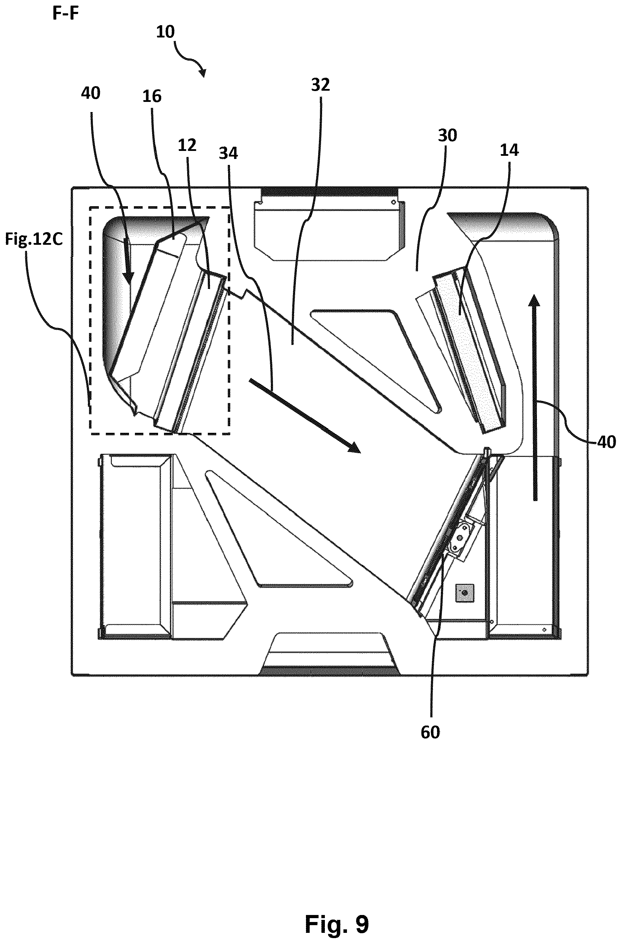

Furthermore, since the polygonal heat exchanger forms a side of the bypass channel then the bypass channel becomes accessible by simply removing the polygonal heat exchanger as shown in figure 9.

In an aspect, the heat recovery ventilation unit comprises a first ventilator downstream to the polygonal heat exchanger along the first airstream pathway, and a second ventilator downstream to the polygonal heat exchanger along the second airstream pathway.

The first and second ventilators will generate a negative pressure upstream to the first and second ventilators and a positive pressure downstream.

In an aspect, the heat recovery ventilation unit comprises
- a first inlet manifold with two or more first inlets forming part of the first airstream pathway upstream to polygonal heat exchanger, and/or
- a first outlet manifold with two or more first outlets forming part of the first airstream pathway downstream to polygonal heat exchanger; and/or
- a second inlet manifold with two or more second inlets forming part of the second airstream pathway upstream to polygonal heat exchanger, and/or
- a second outlet manifold with two or more second outlets forming part of the second airstream pathway downstream to polygonal heat exchanger.

The different manifolds enable the same heat recovery ventilation unit to be used in a plurality of different configurations as the two or more inlets/outlets enable various configurations.

In an aspect, the first outlet manifold comprises a first outlet next to the first ventilator, and/or the second outlet manifold comprises a second outlet next to the second ventilator.

In an aspect, one or more of the two or more inlets and/or the one or more of the two or more outlets are partially carved into the housing.

Thereby, the technician can easily modify the heat recovery ventilation unit on-site in accordance with the requirements of the ventilation system.

In an embodiment, at least one of the partially carved inlets and/or at least one of the partially carved outlets may be formed by a groove.

The technician may in this case cut the inlet or outlet by inserting a knife in the groove and follow the groove.

In an aspect, the heat recovery ventilation unit may comprise a first filter upstream to the polygonal heat exchanger and the bypass channel along the first airstream pathway, and a second filter upstream to the polygonal heat exchanger along the second airstream pathway.

Thereby the airstreams are filtered by the filters.

In an aspect, the heat recovery ventilation unit may comprise
- a pre-heater sub-assembly upstream to the polygonal heat exchanger and the bypass channel along the first airstream pathway,
- or a pre-heater sub-assembly upstream to the polygonal heat exchanger along the second airstream pathway,
wherein the pre-heater sub-assembly comprises a heater element, a heater element holder having an upper and a lower flexible part extending from opposite ends of the heater element holder, the upper and lower flexible parts are arranged to be wedged between sides of the housing.

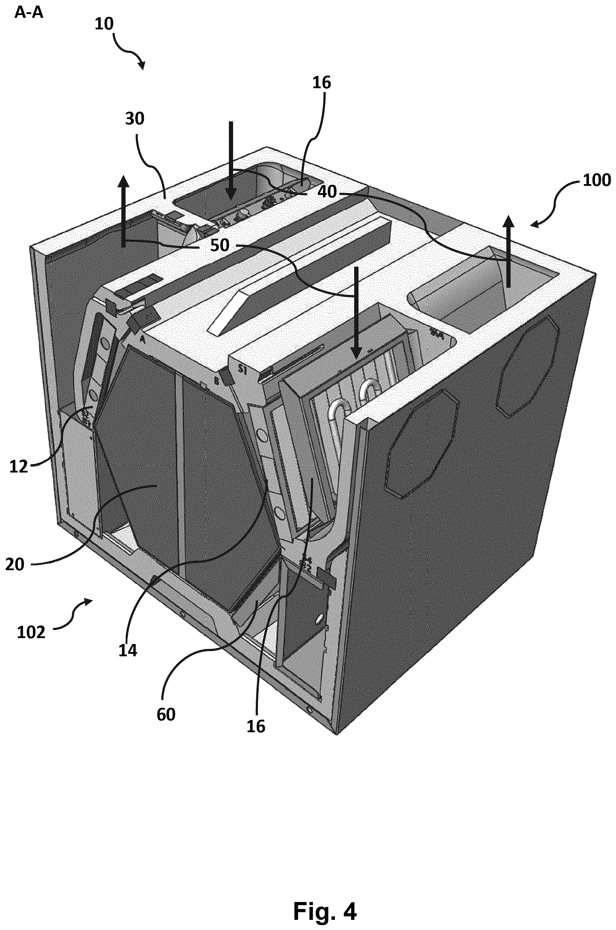

In many cases, the heat recovery ventilation unit will have an inlet close to a backside of the heat recovery ventilation unit and an inlet close to a frontside of the heat recovery ventilation unit. A pre-heater sub-assembly can easily be installed along the second airstream pathway where the inlet is close to the front side. See figure 4 for a situation where it is easy to install a pre-heater sub-assembly.

However, it is more difficult to install a pre-heater sub-assembly along the first airstream pathway. However, the flexible parts enable the pre-heater sub-assembly to be wedged between sides of the housing. The pre-heater sub-assembly can be installed or replaced along the first airstream pathway by removing a filter and the polygonal heat exchanger, then wedging the pre-heater sub-assembly between sides of the housing where the spring force of the flexible parts secures the positioning.

The first flexible part may comprise a bent defining a foot adapted to engage a slit formed in the housing.

In an aspect, wherein heat recovery ventilation unit may comprise a controller configurable such that both the first airstream pathway and the second airstream pathway can be used for outdoor air/supply airstream and extract air/exhaust airstream.

In an embodiment, the stationary grate may comprise between the exchanger section and the bypass section a block part arranged to prevent leak flow.

In an embodiment, the block part may be adapted to extent substantially along a frontside or a backside of the polygonal heat exchanger during use.

In an embodiment, the actuator is connected to the bypass section to avoid formation of condensation on the actuator.

### Description of the Drawing

Embodiments of the invention will be described in the figures, whereon:
- Fig. 1: illustrates a heat recovery ventilation unit;
- Fig. 2: illustrates a schematic of a heat recovery ventilation unit;
- Fig. 3: illustrates a heat recovery ventilation unit without a front side;
- Fig. 4: illustrates cross-section A-A of Fig. 3;
- Fig. 5: illustrates cross-section B-B of Fig. 3;
- Fig. 6: illustrates cross-section C-C of Fig. 3;
- Fig. 7: illustrates cross-section D-D of Fig. 3;
- Fig. 8: illustrates cross-section E-E of Fig. 3;
- Fig. 9: illustrates cross-section F-F of Fig. 3;
- Fig. 10: illustrates an airstream swap unit for a heat recovery ventilation unit according to the invention;
- Fig. 11: illustrates the airstream swap unit positioned relative to the polygonal heat exchanger; and
- Fig. 12: illustrates a pre-heater sub-assembly for a heat recovery ventilation unit according to the invention.

### Detailed Description of the Invention

| **Item** | **No** |
|---|---|
| Heat recovery ventilation unit | 10 |
| First filter | 12 |
| Second filter | 14 |
| Pre-heater sub-assembly | 16 |
| Heating element | 18 |
| Upper and lower flexible parts | 19I, 19II |
| Polygonal heat exchanger | 20 |
| First ventilator | 22 |
| Second ventilator | 24 |
| Housing | 30 |
| Bypass channel | 32 |
| Bypass airstream pathway | 34 |
| First condensation outlet | 36 |
| Second condensation outlet | 38 |
| First airstream pathway | 40 |
| First inlet | 42 |
| First outlet | 44 |
| Second airstream pathway | 50 |
| Second inlet | 52 |
| Second outlet | 54 |
| Airstream swap unit | 60 |
| Heat recovery position | 62 |
| Bypass position | 64 |
| Stationary grate | 66 |
| Slidable grate | 68 |
| Complementary apertures | 69 |
| Bypass section | 70 |
| Exchanger section | 72 |
| Actuator | 74 |
| Block part | 76 |
| First inlet manifold | 80 |
| First outlet manifold | 82 |
| Second inlet manifold | 84 |
| Second outlet manifold | 86 |
| Controller | 90 |
| Backside | 100 |
| Frontside | 102 |
| Topside | 104 |
| Bottom side | 106 |
| Right side | 108 |
| Left side | 110 |

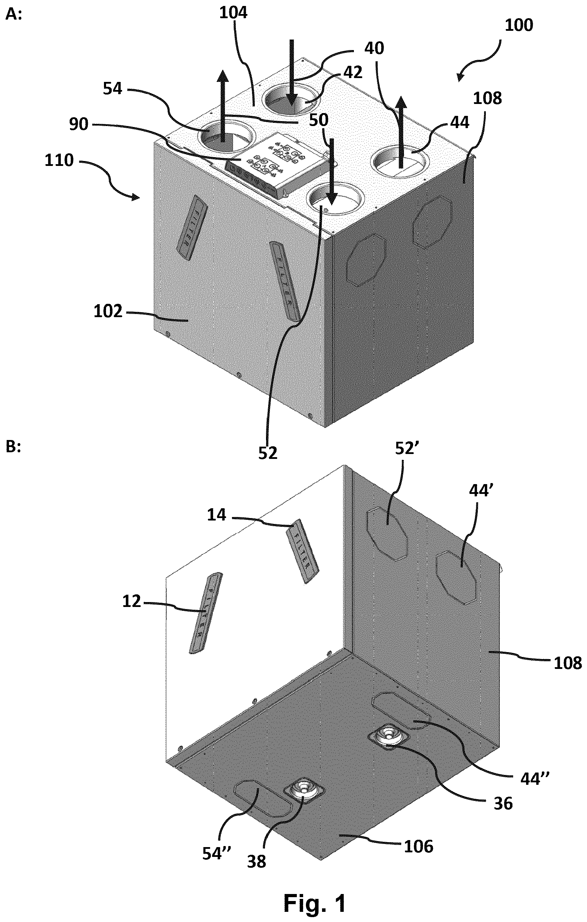

Fig. 1 illustrates a heat recovery ventilation unit 10. Fig. 1A discloses the heat recovery ventilation unit 10 from a top view while Fig. 1B discloses the heat recovery ventilation unit 10.

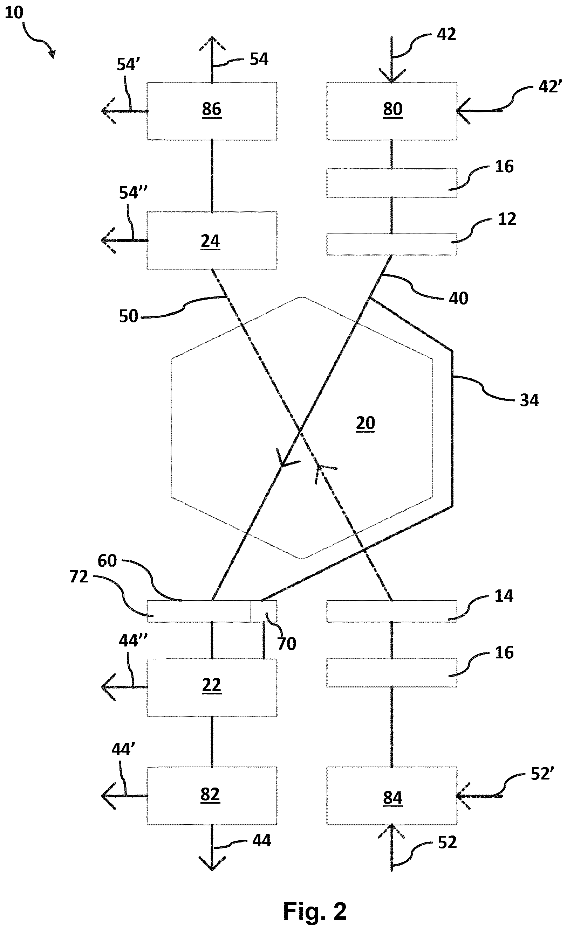

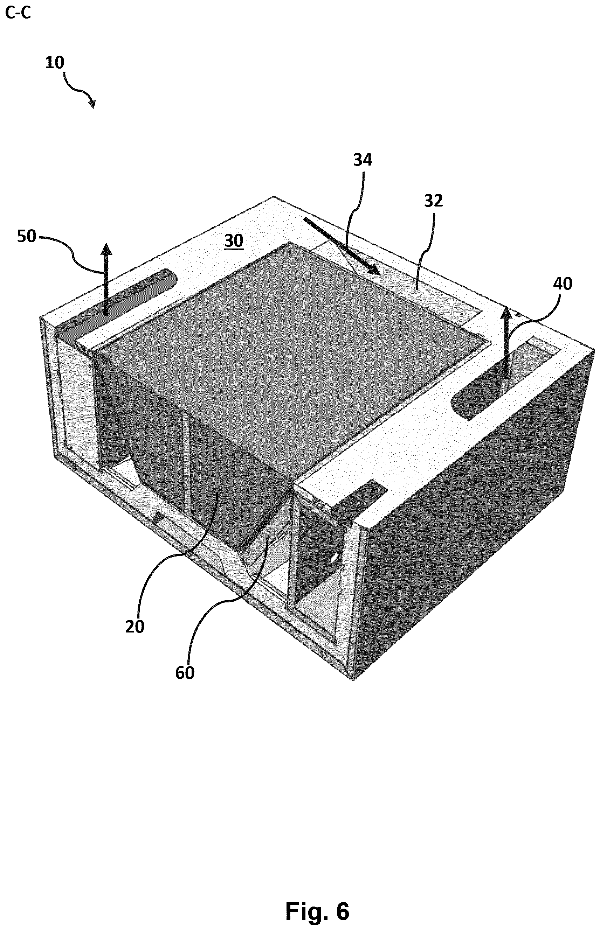

The heat recovery ventilation unit 10 is shown as a schematic in figure 2, and figures 3-9 show individual parts of the heat recovery ventilation unit 10 without a front on a frontside 102 and at different cross-sections.

The heat recovery ventilation unit 10 comprises a first inlet 42 and a first outlet 44 defining a first airstream pathway 40 from the first inlet 42 to the first outlet 44 through a polygonal heat exchanger 20 (not shown in figure 1) and a second inlet 52 and a second outlet 54 defining a second airstream pathway 50 from the second inlet 52 to the second outlet 54 through the polygonal heat exchanger 20.

The shown heat recovery ventilation unit 10 has open inlets 42, 52 and outlets 44, 54 at a topside 104 and partially carved inlets 42' (not shown but present on a right side 108), 52' and partially carved outlets 44', 54'(not shown but present on a right side 108). Furthermore, a bottom side 108 comprises carved outlets 44", 54" along with a first condensation outlet 36 and a second condensation outlet 38 for removal of condensation.

The configuration could be different such as the topside 104 having partially carved inlets 42, 52 and outlets 44, 54.

The heat recovery ventilation unit 10 comprises a controller 90 configurable such that both the first airstream pathway 40 and the second airstream pathway 50 can be used for outdoor air/supply airstream and extract air/exhaust airstream. This is also the reason for two condensation outlets 36, 38.

The heat recovery ventilation unit 10 further comprises a first filter 12 and a second filter 14.

Fig. 2 illustrates a schematic of a heat recovery ventilation unit 10.

The heat recovery ventilation unit 10 comprises a polygonal heat exchanger 20 and a housing 30 substantially formed by insulation material.

The polygonal heat exchanger 20 and the housing 30 define a first inlet 42 and a first outlet 44, which define a first airstream pathway 40 from the first inlet 42 to the first outlet 44 through the polygonal heat exchanger 20, and a second inlet 52 and a second outlet 54 defining a second airstream pathway 50 from the second inlet 52 to the second outlet 54 through the polygonal heat exchanger 20.

The housing 30 further comprises a bypass channel 32 arranged to bypass the polygonal heat exchanger 20 along the first airstream pathway 40, thereby defining a bypass airstream pathway 34.

The heat recovery ventilation unit 10 comprises an airstream swap unit 60 downstream to the polygonal heat exchanger 20 and the bypass airstream pathway 32. The airstream swap unit 60 comprises a bypass section 70 facing the bypass channel 32 and at an exchanger section 72 facing a side of the polygonal heat exchanger 20. The airstream swap unit 60 being configurable between a heat recovery position 62, where the bypass airstream pathway 34 is blocked, and a bypass position 64, where the first airstream pathway 50 is blocked.

The heat recovery ventilation unit 10 comprises a first filter 12 upstream to the polygonal heat exchanger 20 and the bypass channel 34 along the first airstream pathway 40 to filter the airstream during use.

The heat recovery ventilation unit 10 comprises a second filter 14 upstream to the polygonal heat exchanger 20 along the second airstream pathway 50 to filter the airstream during use.

The heat recovery ventilation unit 10 comprises a first ventilator 22 downstream to the polygonal heat exchanger 20 along the first airstream pathway 40 and downstream to the airstream swap unit 60. The heat recovery ventilation unit 10 comprises a second ventilator 24 downstream to the polygonal heat exchanger 20 along the second airstream pathway 50.

The first ventilator 22 and the second ventilator 24 generate a negative pressure upstream to the ventilators 22, 24 and a positive pressure downstream to the ventilators 22, 24.

The first inlet 42 forms part of a first inlet manifold 80 with two or more first inlets 42, 42' forming part of the first airstream pathway 40 upstream to polygonal heat exchanger 20.

The first outlet forms part of an outlet manifold 82 with two or more first outlets 44', 44" forming part of the first airstream pathway 40 downstream to polygonal heat exchanger 20. T first outlet manifold 82 comprises a first outlet 44" next to the first ventilator 22.

The second inlet 52 forms part of a second inlet manifold 84 with two or more second inlets 52, 52' forming part of the second airstream pathway 50 upstream to polygonal heat exchanger 20.

The second outlet 54 forms part of a second outlet manifold 86 with two or more second outlets 54, 54', 54" forming part of the second airstream pathway 50 downstream to polygonal heat exchanger 20. The second outlet manifold 84 comprises a second outlet 54" next to the second ventilator 24

The heat recovery ventilation unit 10 may comprise a single pre-heater sub-assembly 16 upstream to the polygonal heat exchanger 20 and the bypass channel 32 along the first airstream pathway 40, or a heating element 16 upstream to the polygonal heat exchanger 20 along the second airstream pathway 50. The figure shows two pre-heater sub-assemblies 16 however this is to illustrate that the single pre-heater sub-assembly 16 can be positioned at both positions.

In theory one could have two pre-heater sub-assemblies 16, however then the extract air/exhaust airstream would be heated before being exhausted to the ambient atmosphere causing increases in a power or heating costs without any positive effect.

The pre-heater sub-assembly 16 is positioned upstream to the first/second filter 12, 14, however a reverse positioning is possible.

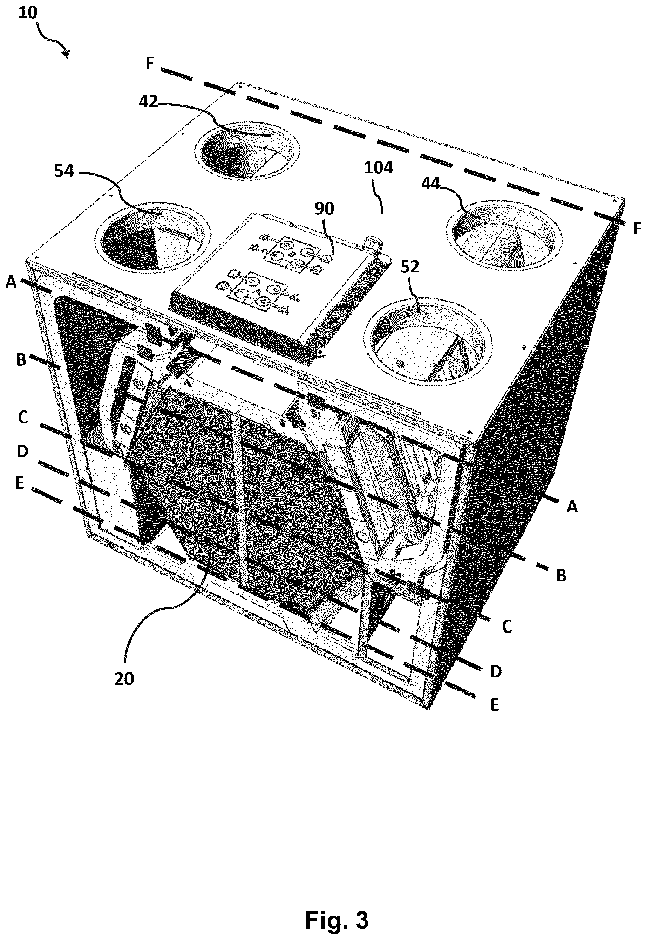

Fig. 3 illustrates a heat recovery ventilation unit 10 without a front side. Thus figure 3 shows how the heat recovery ventilation unit 10 would be view by a technician removing the front side making a polygonal heat exchanger 20.

In the present setup a topside 104 comprises a first and second inlets 42, 52 and first and second outlets 44, 54.

The cross-sections X-X are shown in figures 4-9, which discloses the housing 30 formed substantially of insulation material.

Fig. 4 illustrates cross-section A-A of Fig. 3. The first airstream pathway 40 and the second airstream pathway 50 is marked with arrows.

The first and second filters 12, 14 are partially shown. The filters 12,14 can be installed/removed by simply sliding the filters into/out of the housing 30.

In this illustration, the heat recovery ventilation unit 10 comprises two pre-heater sub-assemblies 16 to illustrate the positioning of the units. The pre-heater sub-assembly 16 along the second airstream pathway 50 can be installed/removed by simply sliding the pre-heater sub-assembly 16 into/out of the housing 30.

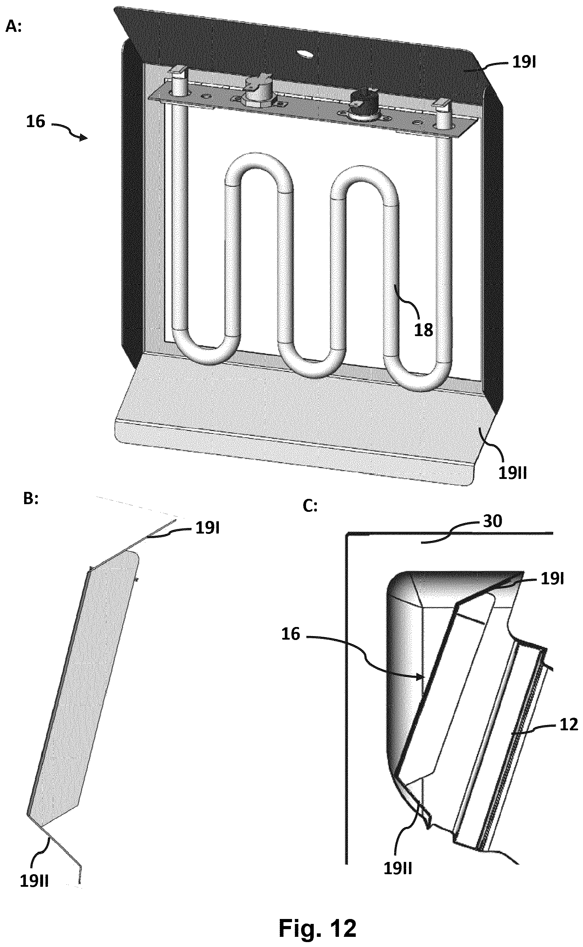

However, the installation/removal of the pre-heater sub-assembly 16 along the first airstream pathway 40 requires modification of the pre-heater sub-assembly 16 to be installed/removed. This is described in greater detail in the description of figure 12.

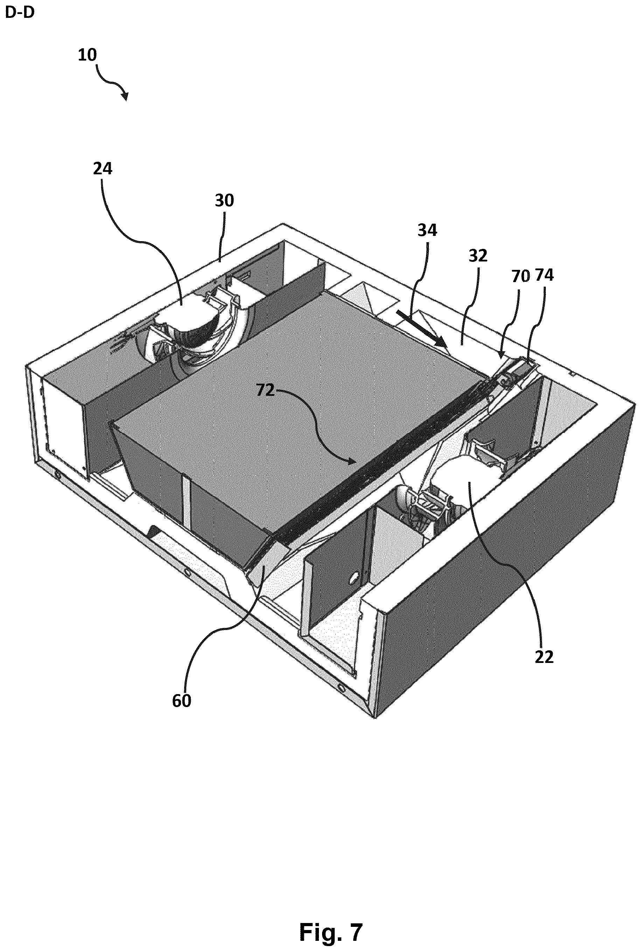

Part of an airstream swap unit 60 is visible but will be discussed in the figure description of figures 7, 9-11.

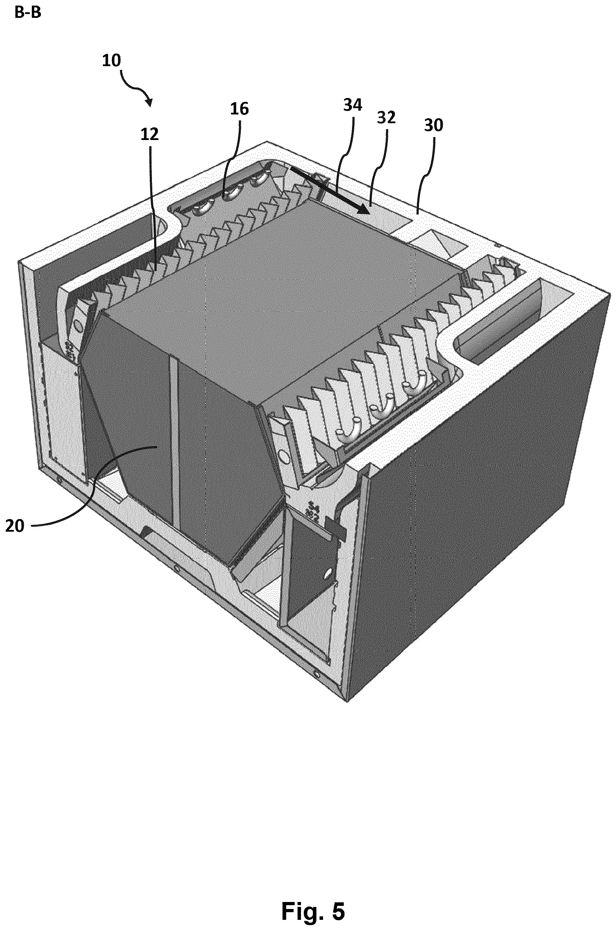

Fig. 5-6 illustrates cross-section B-B and C-C of Fig. 3. The cross-section discloses the housings 30 defining a bypass channel 32 defining a bypass airstream pathway bypassing the polygonal heat exchanger 20. The polygonal heat exchanger 20 form a side of the bypass channel 32 which makes the bypass channel 32 accessible when removing the polygonal heat exchanger 20 and this enables the distance between the backside 100 and front side 102 to be reduced.

The first filter 12 and optionally the pre-heater sub-assembly 16 are positioned upstream to the bypass channel 32 and the polygonal heat exchanger 20.

Fig. 7 illustrates cross-section D-D of Fig. 3. The cross-section discloses both the first ventilator 22 and the second ventilator 24.

The airstream swap unit 60 has an exchanger section 72 facing the polygonal heat exchanger 20 and a bypass section 70 facing the bypass channel 32. The actuator 74 is positioned at the bypass section 70 to avoid condensation on the actuator 74. The actuator 74 controls whether the airstream swap unit 60 is at a heat recovery position 62, where the bypass airstream pathway 34 is blocked, or at a bypass position 64, where the first airstream pathway 50 is blocked.

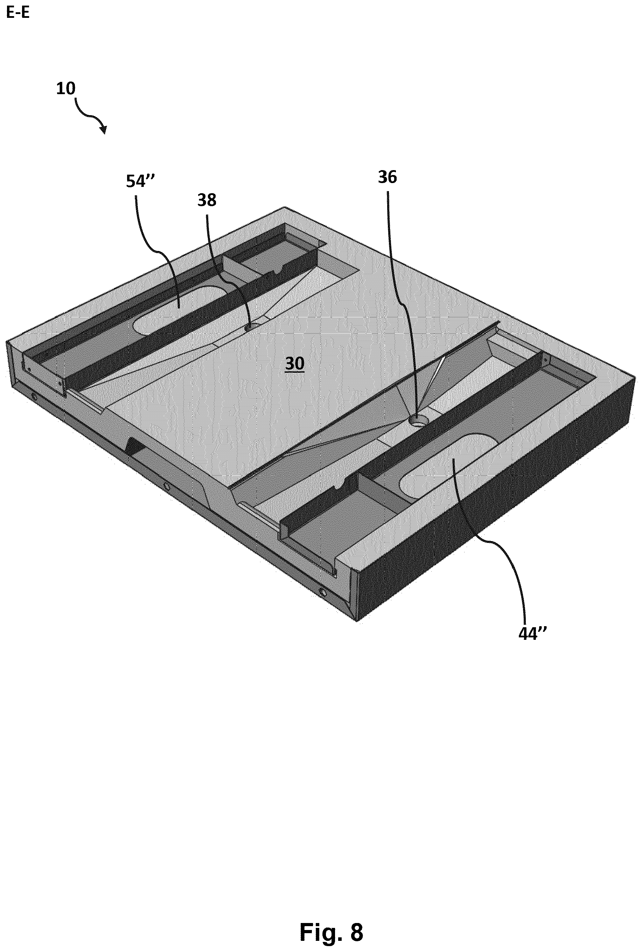

Fig. 8 illustrates cross-section E-E of Fig. 3 and discloses a bottom of the housing 30 comprising a first condensation outlet 36 and second condensation outlet 38. The figure shows the first outlet 44" of the first outlet manifold 82 next to the first ventilator 22, which would be positioned above the first outlet 44", see figure 7. The figure further shows the second outlet 54" of the second outlet manifold 84 next to the second ventilator 24 which would be positioned above the first outlet 44", see figure 7.

Fig. 9 illustrates cross-section F-F of Fig. 3 showing the bypass channel 32 defined by the housing 30. The first airstream pathway 40 is marked before and after the bypass channel 32 defining the bypass airstream pathway 34. The airstream swap unit 60 controls whether the polygonal heat exchanger 20 is bypassed or not.

The marked box is discussed in greater detail in fig. 12A as the shown pre-heater sub-assembly 16 cannot be installed through the first inlet 42 shown in figure 3.

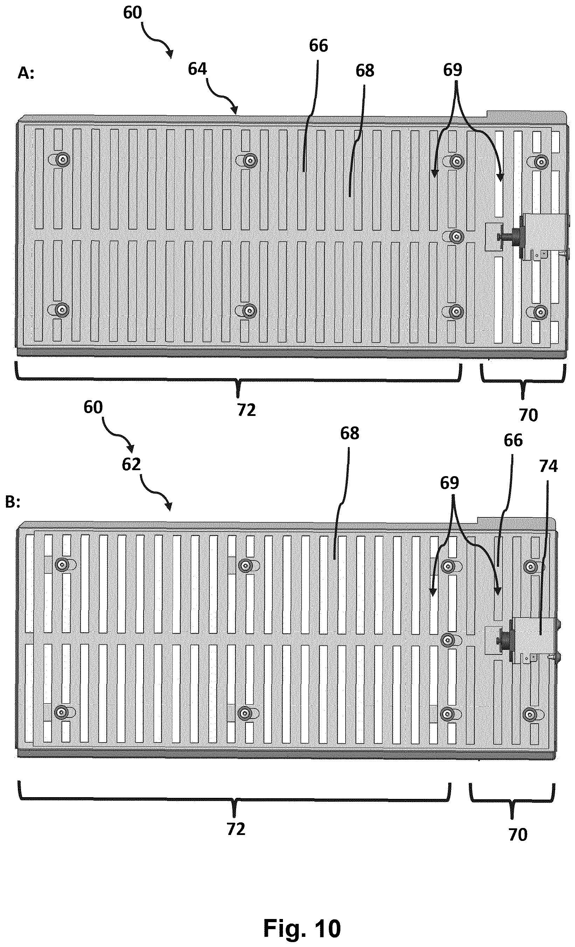

Fig. 10 illustrates an airstream swap unit 60. The airstream swap unit 60 is adapted to be positioned downstream to the polygonal heat exchanger 20 and the bypass airstream pathway 32. The airstream swap unit 60 is configurable between a heat recovery position 62, where the bypass airstream pathway 34 is blocked, and a bypass position 64, where the first airstream pathway 50 is blocked.

The airstream swap unit 60 comprises a stationary grate 66 and a slidable grate 68. The grates 66, 68 comprising a series of complementary apertures 69 at a bypass section 70 for facing the bypass channel 32 and at an exchanger section 72 for facing a side of the polygonal heat exchanger 20. The apertures 69 are offset between the bypass section 70 and the exchanger section 72 to achieve the following effect wherein
- at the heat recovery position 62 (Fig. 10B), the slidable grate 68 is positioned such that the apertures 69 at the exchanger section 72 overlap and the apertures 69 at the bypass section 70 are blocked, and
- at the bypass position 64 (Fig. 10A), the slidable grate 68 is positioned such that the apertures 69 at the bypass section overlap 70 and the apertures 69 at the exchanger section 72 are blocked.

The airstream swap unit 60 comprises an actuator 74 adapted for displacing the slidable grate 68 between the heat recovery position 62 (Fig. 10B) and the bypass position 64 (Fig. 10A).

The actuator 74 is connected to the bypass section 64 as depending on the airstream along the first airstream pathway 40 condensation may be formed downstream to the polygonal heat exchanger 20 thus the condensation will not be formed on the actuator 74.

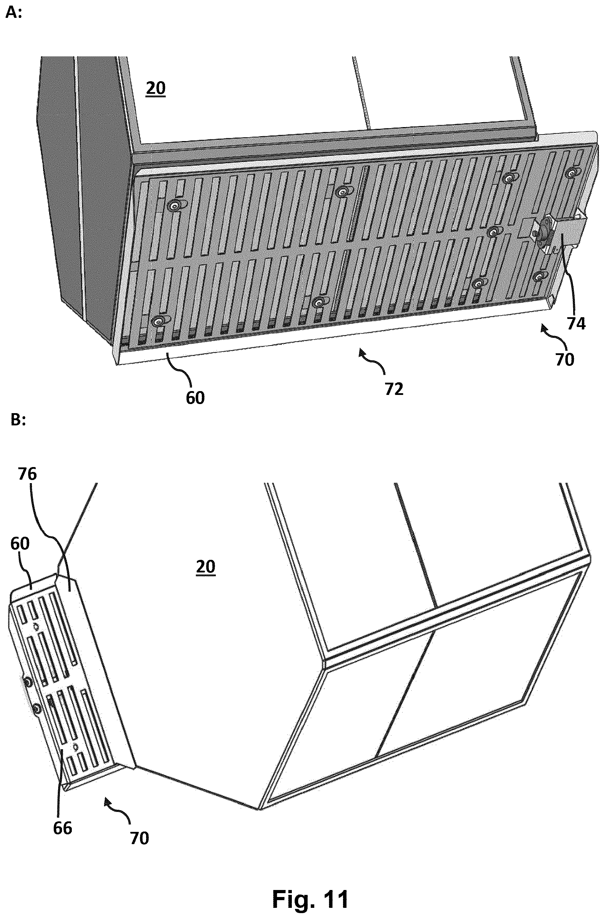

Fig. 11 illustrates the airstream swap unit 60 of figure 10 positioned relative to the polygonal heat exchanger 20.

The airstream swap unit 60 is positioned along a side of the polygonal heat exchanger 20, this part of the airstream swap unit 60 is the exchanger section 72 and the remaining part is the bypass section 70 to face the bypass channel.

Fig. 11B discloses that the stationary grate 66 comprises between the exchanger section 72 and bypass section 70 a block part 76 arranged to prevent leak flow. The block part 76 extent substantially along a front side or a backside of the polygonal heat exchanger 20, which further decreases the risk of leak flow.

Fig. 12 illustrates a pre-heater sub-assembly 16. The pre-heater sub-assembly 16 is designed such that the pre-heater sub-assembly 16 can be in the chamber shown in fig. 12C and marked box in figure 9.

In this case, the first filter 12 and the polygonal heat exchanger 20 is removed from the heat recovery ventilation unit 10 before the pre-heater sub-assembly 16 is inserted into chamber.

Figure 12A and 12B discloses that the pre-heater sub-assembly 16 comprises a heater element 18, heater element holder and upper and lower flexible parts 19I,19II extending from opposite ends of the heater element holder.

The upper and lower flexible parts 19I,19II are adapted to be wedged between sides of a housing 30 as shown in figure 12C. The housing 30 may be adapted to engage ends of the upper and lower flexible parts 19I,19II.

The upper and lower flexible parts 19I,19II are flexible to achieve a spring force such that a biasing force is established between the upper and lower flexible parts 19I,19II thereby securing the pre-heater sub-assembly 16.

The upper flexible part 191 comprises a bent defining a foot adapted to engage a slit formed in the housing.

Thereby enabling a technician to install a pre-heater sub-assembly 16 along either the first airstream pathway 40 or the second airstream pathway 50. Thereby, the pre-heater sub-assembly 16 enables that the first airstream pathway 40 and the second airstream 50 can be used for outdoor air/supply airstream and extract air/exhaust airstream in the cases where pre-heating is required.

## Claims

1. A heat recovery ventilation unit (10) comprising
- a polygonal heat exchanger (20) and a housing (30), wherein the polygonal heat exchanger (20) and the housing (30) define
- a first inlet (42) and a first outlet (44) defining a first airstream pathway (40) from the first inlet (42) to the first outlet (44) through the polygonal heat exchanger (20);
- a second inlet (52) and a second outlet (54) defining a second airstream pathway (50) from the second inlet (52) to the second outlet (54) through the polygonal heat exchanger (20);
- the housing (30) further comprises
- a bypass channel (32) arranged to bypass the polygonal heat exchanger (20) along the first airstream pathway (40), thereby defining a bypass airstream pathway (34),
- an airstream swap unit (60) downstream to the polygonal heat exchanger (20) and the bypass airstream pathway (32), the airstream swap unit (60) being configurable between a heat recovery position (62), where the bypass airstream pathway (34) is blocked, and a bypass position (64), where the first airstream pathway (50) is blocked.
**characterised in that**
the housing (30) is substantially formed by insulation material, and
the airstream swap unit (60) comprises a stationary grate (66) and a slidable grate (68), the grates (66, 68) comprising a series of complementary apertures (69) at a bypass section (70) facing the bypass channel (32) and at an exchanger section (72) facing a side of the polygonal heat exchanger (20), wherein the apertures (69) are offset between the bypass section (70) and the exchanger section (72), wherein
- at the heat recovery position (62), the slidable grate (68) is positioned such that the apertures (69) at the heat exchanger section (72) overlap and the apertures (69) at the bypass section (70) are blocked, and
- at the bypass position (64), the slidable grate (68) is positioned such that the apertures (69) at the bypass section overlap (70) and the apertures (69) at the exchanger section (72) are blocked.

2. A heat recovery ventilation unit (10) according to claim 1, wherein the stationary grate (66) comprises between the exchanger section (72) and bypass section (70) a block part (76) arranged to prevent leak flow.

3. A heat recovery ventilation unit (10) according to claim 2, wherein the block part (76) extent substantially along a front side or a backside of the polygonal heat exchanger (20).

4. A heat recovery ventilation unit (10) according to anyone of claims 1-3, wherein the airstream swap unit (60) comprises an actuator (74) adapted for displacing the slidable grate (68).

5. A heat recovery ventilation unit (10) according to claim 4, wherein the actuator (74) is connected to the bypass section (64).

6. A heat recovery ventilation unit (10) according to anyone of claims 1-5, wherein the polygonal heat exchanger (20) forms a side of the bypass channel (32).

7. A heat recovery ventilation unit (10) according to anyone of claims 1-6, wherein the heat recovery ventilation unit (10) comprises a first ventilator (22) downstream to the polygonal heat exchanger (20) along the first airstream pathway (40), and a second ventilator (24) downstream to the polygonal heat exchanger (20) along the second airstream pathway (50).

8. A heat recovery ventilation unit (10) according to anyone of claims 1-7, wherein the heat recovery ventilation unit (10) comprises
- a first inlet manifold (80) with two or more first inlets (42) forming part of the first airstream pathway (40) upstream to polygonal heat exchanger (20), and/or
- a first outlet manifold (82) with two or more first outlets (44) forming part of the first airstream pathway (40) downstream to polygonal heat exchanger (20); and/or
- a second inlet manifold (84) with two or more second inlets (52) forming part of the second airstream pathway (50) upstream to polygonal heat exchanger (20), and/or
- a second outlet manifold (86) with two or more second outlets (54) forming part of the second airstream pathway (50) downstream to polygonal heat exchanger (20).

9. A heat recovery ventilation unit (10) according to anyone of claim 8, wherein one or more of the two or more inlets (42, 52) and/or the one or more of the two or more outlets (44, 54) are partially carved into the housing (30).

10. A heat recovery ventilation unit (10) according to anyone of claim 1-9, wherein the heat recovery ventilation unit (10) comprises a first filter (12) upstream to the polygonal heat exchanger (20) and the bypass channel (34) along the first airstream pathway (40), and a second filter (14) upstream to the polygonal heat exchanger (20) along the second airstream pathway (50).

11. A heat recovery ventilation unit (10) according to anyone of claim 1-10, wherein the heat recovery ventilation unit (10) comprises
- a pre-heater sub-assembly (16) upstream to the polygonal heat exchanger (20) and the bypass channel (32) along the first airstream pathway (40),
- or a pre-heater sub-assembly (16) upstream to the polygonal heat exchanger (20) along the second airstream pathway (50),
wherein the pre-heater sub-assembly (16) comprises a heater element (18), a upper and lower flexible parts (19I,19II) extending from opposite ends of the pre-heater sub-assembly (16), the upper and lower flexible parts (19I,19II) are arranged to be wedged between sides of the housing (30).

12. A heat recovery ventilation unit (10) according to anyone of claims 1-11, wherein the heat recovery ventilation unit (10) comprises a controller (90) configurable such that both the first airstream pathway (40) and the second airstream pathway (50) can be used for outdoor air/supply airstream and extract air/exhaust airstream.

## Patentansprüche

1. Wärmerückgewinnungsbelüftungseinheit (10), umfassend
- einen polygonalen Wärmetauscher (20) und ein Gehäuse (30), wobei der polygonale Wärmetauscher (20) und das Gehäuse (30) Folgendes definieren:
- einen ersten Einlass (42) und einen ersten Auslass (44), die einen ersten Luftstromweg (40) von dem ersten Einlass (42) zu dem ersten Auslass (44) durch den polygonalen Wärmetauscher (20) definieren;
- einen zweiten Einlass (52) und einen zweiten Auslass (54), die einen zweiten Luftstromweg (50) von dem zweiten Einlass (52) zu dem zweiten Auslass (54) durch den polygonalen Wärmetauscher (20) definieren;
- wobei das Gehäuse (30) ferner umfasst:
- einen Bypasskanal (32), der angeordnet ist, um den polygonalen Wärmetauscher (20) entlang des ersten Luftstromwegs (40) zu umgehen, wodurch ein Bypassluftstromweg (34) definiert wird,
- eine Luftstromaustauscheinheit (60) stromabwärts des polygonalen Wärmetauschers (20) und des Bypassluftstromweges (32), wobei die Luftstromaustauscheinheit (60) konfigurierbar ist zwischen
einer Wärmerückgewinnungsposition (62), in der der Bypassluftstromweg (34) blockiert ist, und
einer Bypassposition (64), in der der erste Luftstromweg (50) blockiert ist,
**dadurch gekennzeichnet, dass**
das Gehäuse (30) im Wesentlichen durch Isolationsmaterial gebildet ist, und
die Luftstromaustauscheinheit (60) ein stationäres Gitter (66) und ein verschiebbares Gitter (68) umfasst, wobei die Gitter (66, 68) eine Reihe komplementärer Öffnungen (69) an einem dem Bypasskanal (32) zugewandten Bypassabschnitt (70) und an einem einer Seite des polygonalen Wärmetauschers (20) zugewandten Austauschabschnitt (72) umfassen, wobei die Öffnungen (69) zwischen dem Bypassabschnitt (70) und dem Austauschabschnitt (72) versetzt sind, wobei
- in der Wärmerückgewinnungsposition (62) das verschiebbare Gitter (68) so positioniert ist, dass sich die Öffnungen (69) an dem Wärmetauscherabschnitt (72) überlappen und die Öffnungen (69) an dem Bypassabschnitt (70) blockiert sind, und
- in der Bypassposition (64) das verschiebbare Gitter (68) so positioniert ist, dass sich die Öffnungen (69) an dem Bypassabschnitt (70) überlappen und die Öffnungen (69) an dem Austauschabschnitt (72) blockiert sind.

2. Wärmerückgewinnungsbelüftungseinheit (10) nach Anspruch 1, wobei das stationäre Gitter (66) zwischen dem Austauschabschnitt (72) und dem Bypassabschnitt (70) ein Blockteil (76) umfasst, das so angeordnet ist, dass es Leckströme verhindert.

3. Wärmerückgewinnungsbelüftungseinheit (10) nach Anspruch 2, wobei sich der Blockteil (76) im Wesentlichen entlang einer Vorderseite oder einer Rückseite des polygonalen Wärmetauschers (20) erstreckt.

4. Wärmerückgewinnungsbelüftungseinheit (10) nach einem der Ansprüche 1-3, wobei die Luftstromaustauscheinheit (60) einen Aktor (74) umfasst, der zum Verschieben des verschiebbaren Gitters (68) angepasst ist.

5. Wärmerückgewinnungsbelüftungseinheit (10) nach Anspruch 4, wobei der Aktor (74) mit dem Bypassabschnitt (64) verbunden ist.

6. Wärmerückgewinnungsbelüftungseinheit (10) nach einem der Ansprüche 1-5, wobei der polygonale Wärmetauscher (20) eine Seite des Bypasskanals (32) bildet.

7. Wärmerückgewinnungsbelüftungseinheit (10) nach einem der Ansprüche 1-6, wobei die Wärmerückgewinnungsbelüftungseinheit (10) einen ersten Belüfter (22) stromabwärts des polygonalen Wärmetauschers (20) entlang des ersten Luftstromwegs (40) und einen zweiten Belüfter (24) stromabwärts des polygonalen Wärmetauschers (20) entlang des zweiten Luftstromwegs (50) umfasst.

8. Wärmerückgewinnungsbelüftungseinheit (10) nach einem der Ansprüche 1-7, wobei die Wärmerückgewinnungsbelüftungseinheit (10) Folgendes umfasst:
- einen ersten Einlassverteiler (80) mit zwei oder mehreren ersten Einlässen (42), die Teil des ersten Luftstromwegs (40) stromaufwärts des polygonalen Wärmetauschers (20) bilden, und/oder
- einen ersten Auslassverteiler (82) mit zwei oder mehreren ersten Auslässen (44), die einen Teil des ersten Luftstromweges (40) stromabwärts des polygonalen Wärmetauschers (20) bilden; und/oder
- einen zweiten Einlassverteiler (84) mit zwei oder mehreren zweiten Einlässen (52), die Teil des zweiten Luftstromwegs (50) stromaufwärts des polygonalen Wärmetauschers (20) bilden, und/oder
- einen zweiten Auslassverteiler (86) mit zwei oder mehreren zweiten Auslässen (54), die einen Teil des zweiten Luftstromweges (50) stromabwärts des polygonalen Wärmetauschers (20) bilden.

9. Wärmerückgewinnungsbelüftungseinheit (10) nach einem von Anspruch 8, wobei einer oder mehrere der zwei oder mehreren Einlässe (42, 52) und/oder der eine oder die mehreren der zwei oder mehreren Auslässe (44, 54) teilweise in das Gehäuse (30) eingeschnitzt sind.

10. Wärmerückgewinnungsbelüftungseinheit (10) nach einem der Ansprüche 1-9, wobei die Wärmerückgewinnungsbelüftungseinheit (10) ein erstes Filter (12) stromaufwärts des polygonalen Wärmetauschers (20) und des Bypasskanals (34) entlang des ersten Luftstromwegs (40) und ein zweites Filter (14) stromaufwärts des polygonalen Wärmetauschers (20) entlang des zweiten Luftstromwegs (50) umfasst.

11. Wärmerückgewinnungsbelüftungseinheit (10) nach einem der Ansprüche 1-10, wobei die Wärmerückgewinnungsbelüftungseinheit (10) Folgendes umfasst
- eine Vorwärmerunteranordnung (16) stromaufwärts des polygonalen Wärmetauschers (20) und des Bypasskanals (32) entlang des ersten Luftstromweges (40),
- oder eine Vorwärmerunteranordnung (16) stromaufwärts des polygonalen Wärmetauschers (20) entlang des zweiten Luftstromweges (50),
wobei die Vorwärmerunteranordnung (16) ein Heizelement (18), ein oberes und unteres flexibles Teil (191, 1911) umfasst, die sich von gegenüberliegenden Enden der Vorwärmerunteranordnung (16) erstrecken, wobei das obere und das untere flexible Teil (191, 1911) so angeordnet sind, dass sie zwischen Seiten des Gehäuses (30) verkeilt sind.

12. Wärmerückgewinnungsbelüftungseinheit (10) nach einem der Ansprüche 1-11, wobei die Wärmerückgewinnungsbelüftungseinheit (10) eine Steuerung (90) umfasst, die derart konfigurierbar ist, dass sowohl der erste Luftstromweg (40) als auch der zweite Luftstromweg (50) für Außenluft/Zuluftstrom und Abluft/Austrittsluftstrom verwendet werden können.

## Revendications

1. Unité de ventilation à récupération de chaleur (10) comprenant
- un échangeur de chaleur polygonal (20) et un boîtier (30), dans laquelle l'échangeur de chaleur polygonal (20) et le boîtier (30) définissent
- une première entrée (42) et une première sortie (44) définissant un premier chemin de flux d'air (40) de la première entrée (42) vers la première sortie (44) à travers l'échangeur de chaleur polygonal (20) ;
- une seconde entrée (52) et une seconde sortie (54) définissant un second chemin de flux d'air (50) de la seconde entrée (52) vers la seconde sortie (54) à travers l'échangeur de chaleur polygonal (20) ;
- le boîtier (30) comprend également
- un canal de dérivation (32) agencé pour contourner l'échangeur de chaleur polygonal (20) le long du premier chemin de flux d'air (40), définissant ainsi un chemin de flux d'air de dérivation (34),
- une unité d'échange de flux d'air (60) en aval de l'échangeur de chaleur polygonal (20) et du chemin de flux d'air de dérivation (32), l'unité d'échange de flux d'air (60) pouvant être configurée entre
une position de récupération de chaleur (62), où le chemin de flux d'air de dérivation (34) est bloqué, et
une position de dérivation (64), où le premier chemin de flux d'air (50) est bloqué,
**caractérisée en ce que**
le boîtier (30) est sensiblement formé par un matériau isolant, et
l'unité d'échange de flux d'air (60) comprend une grille fixe (66) et une grille coulissante (68), les grilles (66, 68) comprenant une série d'ouvertures complémentaires (69) au niveau d'une section de dérivation (70) faisant face au canal de dérivation (32) et au niveau d'une section d'échangeur (72) faisant face à un côté de l'échangeur de chaleur polygonal (20), dans laquelle les ouvertures (69) sont décalées entre la section de dérivation (70) et la section d'échangeur (72), dans laquelle
- au niveau de la position de récupération de chaleur (62), la grille coulissante (68) est positionnée de telle sorte que les ouvertures (69) au niveau de la section d'échangeur de chaleur (72) se chevauchent et que les ouvertures (69) au niveau de la section de dérivation (70) soient bloquées, et
- au niveau de la position de dérivation (64), la grille coulissante (68) est positionnée de telle sorte que les ouvertures (69) au niveau de la section de dérivation (70) se chevauchent et que les ouvertures (69) au niveau de la section d'échangeur (72) soient bloquées.

2. Unité de ventilation à récupération de chaleur (10) selon la revendication 1, dans laquelle la grille fixe (66) comprend entre la section d'échangeur (72) et la section de dérivation (70) une partie bloc (76) agencée pour empêcher un écoulement de fuite.

3. Unité de ventilation à récupération de chaleur (10) selon la revendication 2, dans laquelle la partie bloc (76) se prolonge sensiblement le long d'un côté avant ou d'un côté arrière de l'échangeur de chaleur polygonal (20).

4. Unité de ventilation à récupération de chaleur (10) selon l'une quelconque des revendications 1 à 3, dans laquelle l'unité d'échange de flux d'air (60) comprend un actionneur (74) adapté pour déplacer la grille coulissante (68).

5. Unité de ventilation à récupération de chaleur (10) selon la revendication 4, dans laquelle l'actionneur (74) est relié à la section de dérivation (64).

6. Unité de ventilation à récupération de chaleur (10) selon l'une quelconque des revendications 1 à 5, dans laquelle l'échangeur de chaleur polygonal (20) forme un côté du canal de dérivation (32).

7. Unité de ventilation à récupération de chaleur (10) selon l'une quelconque des revendications 1 à 6, dans laquelle l'unité de ventilation à récupération de chaleur (10) comprend un premier ventilateur (22) en aval de l'échangeur de chaleur polygonal (20) le long du premier chemin de flux d'air (40), et un second ventilateur (24) en aval de l'échangeur de chaleur polygonal (20) le long du second chemin de flux d'air (50).

8. Unité de ventilation à récupération de chaleur (10) selon l'une quelconque des revendications 1 à 7, dans laquelle l'unité de ventilation à récupération de chaleur (10) comprend
- un premier collecteur d'entrée (80) avec deux premières entrées (42) ou plus faisant partie du premier chemin de flux d'air (40) en amont d'un échangeur de chaleur polygonal (20), et/ou
- un premier collecteur de sortie (82) avec deux premières sorties (44) ou plus faisant partie du premier chemin de flux d'air (40) en aval d'un échangeur de chaleur polygonal (20) ; et/ou
- un second collecteur d'entrée (84) avec deux secondes entrées (52) ou plus faisant partie du second chemin de flux d'air (50) en amont d'un échangeur de chaleur polygonal (20), et/ou
- un second collecteur de sortie (86) avec deux secondes sorties (54) ou plus faisant partie du second chemin de flux d'air (50) en aval d'un échangeur de chaleur polygonal (20).

9. Unité de ventilation à récupération de chaleur (10) selon l'une quelconque de la revendication 8, dans laquelle l'une ou plusieurs des deux entrées (42, 52) ou plus et/ou l'une ou les plusieurs des deux sorties (44, 54) ou plus sont partiellement creusées dans le boîtier (30).

10. Unité de ventilation à récupération de chaleur (10) selon l'une quelconque des revendications 1 à 9, dans laquelle l'unité de ventilation à récupération de chaleur (10) comprend un premier filtre (12) en amont de l'échangeur de chaleur polygonal (20) et du canal de dérivation (34) le long du premier chemin de flux d'air (40), et un second filtre (14) en amont de l'échangeur de chaleur polygonal (20) le long du second chemin de flux d'air (50).

11. Unité de ventilation à récupération de chaleur (10) selon l'une quelconque des revendications 1 à 10, dans laquelle l'unité de ventilation à récupération de chaleur (10) comprend
- un sous-ensemble de préchauffeur (16) en amont de l'échangeur de chaleur polygonal (20) et du canal de dérivation (32) le long du premier chemin de flux d'air (40),
- ou un sous-ensemble de préchauffeur (16) en amont de l'échangeur de chaleur polygonal (20) le long du second chemin de flux d'air (50),
dans laquelle le sous-ensemble de préchauffeur (16) comprend un élément chauffant (18), des parties flexibles supérieure et inférieure (191, 1911) se prolongeant à partir d'extrémités opposées du sous-ensemble de préchauffeur (16), les parties flexibles supérieure et inférieure (191, 1911) sont agencées pour être coincées entre des côtés du boîtier (30).

12. Unité de ventilation à récupération de chaleur (10) selon l'une quelconque des revendications 1 à 11, dans laquelle l'unité de ventilation à récupération de chaleur (10) comprend un dispositif de commande (90) pouvant être configuré de telle sorte que le premier chemin de flux d'air (40) et le second chemin de flux d'air (50) puissent tous deux être utilisés pour l'air extérieur/flux d'air d'alimentation et l'air extrait/flux d'air d'évacuation.
